# EUROPÄISCHE PATENTSCHRIFT

(11) **EP 2 397 717 B1**
(45) Veröffentlichungstag und Bekanntmachung des Hinweises auf die Patenterteilung: **17.04.2013**
(21) Anmeldenummer: 11167796.9
(22) Anmeldetag: 27.05.2011
(51) Int. Cl.: F16D 63/00, F16D 65/14

(54) **Brems- und/oder Festellvorrichtung eines auf einer Schiene verfahrbaren Schlittens**
Brake and/or fixing device of a slide which can be moved on a rail
Dispositif de freinage et/ou de réglage d'un chariot se déplaçant sur un rail

(30) Priorität: 28.05.2010 DE 102010021859
(43) Veröffentlichungstag der Anmeldung: 21.12.2011
(73) Patentinhaber: Schunk GmbH & Co. KG Spann- und Greiftechnik, 74348 Lauffen am Neckar (DE)
(72) Erfinder: Hoch, Andreas, 74388 Talheim (DE); Schleusener, Tobias, 75031 Eppingen (DE); Drab, Michael, 73033 Göppingen (DE)
(74) Vertreter: Dreiss

(56) Entgegenhaltungen:
- EP-B1- 0 973 630
- DE-A1- 19 715 142

## Beschreibung

Die Erfindung betrifft einen Schlitten mit einer Brems- und/oder Feststellvorrichtung zum Abbremsen und/oder Feststellen des entlang einer Schiene geführten, einen Grundkörper aufweisenden Schlittens. Insbesondere bei Linearführungen, die einen entlang einer Schiene geführten Schlitten aufweisen, kann gefordert werden, dass der Schlitten in verschiedenen Positionen mechanisch zu klemmen ist. Ein Klemmen soll dabei insbesondere frei von der Zufuhr von äußerer Energie, beispielsweise Druckluft und/oder Strom, sein. Dies ist insbesondere deshalb erforderlich, dass ein Klemmen des Schlittens auch bei einem Stromausfall sicher gewährleistet wird.

Brems- und/oder Klemmvorrichtungen sind beispielsweise aus der DE 296 13 45 U1, der DE 10 2005 016 719 B4 oder der DE 197 15 142 A1 bekannt.

Die EP 0 973 630 B1 offenbart eine Linearführung mit einer Bremsvorrichtung, wobei über einen federbeaufschlagen Schieber eine Bremswirkung über keilförmige Bremsbacken erreicht wird. Zum Lösen der Bremse wirken in mit Druck beaufschlagten Druckkammern gelagerte Kolben entgegen der Federkraft.

Der vorliegenden Erfindung liegt die Aufgabe zugrunde, einen Schlitten mit einer Brems- und/oder Feststellvorrichtung bereitzustellen, welcher einen einfachen Aufbau aufweist und dennoch funktionssicher arbeitet.

Diese Aufgabe wird durch einen Schlitten mit den Merkmalen des Anspruchs 1 gelöst.

Ein solcher Schlitten zeichnet sich folglich dadurch aus, dass am Grundkörper eine relativ zum Grundkörper in axialer Richtung verlagerbare Brücke und eine parallel zur Schienenlängsrichtung verlaufende Bremszunge derart vorgesehen sind, dass bei einer Bewegung der Brücke in eine Verriegelungslage die Bremszunge zur Abbremsung und/oder Feststellung des Schlittens gegen die Schiene gedrängt wird. Hierdurch wird eine einfache und dennoch funktionssichere Art und Weise der Abbremsung und/oder Feststellung des Schlittens erreicht. Zur axialen Bewegung der Brücke ist zwischen dem Grundkörper und der Brücke wenigstens ein Kolben-ZylinderAntrieb vorgesehen, wobei der Kolben derart im Zylinder mit Spiel gelagert ist, dass die Bewegung der Brücke quer zur Schienenlängsrichtung möglich ist. Das über die schwimmende Lagerung auszugleichende Spiel wird folglich über eine entsprechende Lagerung des Kolbens im zugehörigen Zylinder ermöglicht. Dadurch kann gewährleistet werden, dass auch bei Beaufschlagung des Kolben-Zylinder-Antriebs und bei einem damit einhergehenden Verformen oder Aufbiegen der Brücke kein Verklemmen des Antriebs auftritt. Der Zylinder wird dabei vom Grundteil und/oder von der Brücke gebildet, wobei an der Brücke und/oder am Grundteil ein in den Zylinder eingreifender Kolben vorgesehen sein kann. Es ist ein grundkörper seitiger Zylinderraum und ein brückenseitiger, in den Zylinderraum eingreifender Kolben vorgesehen, wobei der brückenseitige Kolben hohl ausgebildet ist und einen brückenseitigen Zylindgrraum bildet. Weiterhin ist am Grundkörper eine den grundkörperseitigen Zylinderraum durchgreifende und in einen brückenseitigen Zylinderraum ragende Kolbenstange vorgesehen, welche einen im brückenseitigen Zylinderraum liegenden Kolben umfasst. Eine derartige Ausbildung hat den Vorteil, dass sie sehr kompakt baut und dass zwei druckbeaufschlagbare Zylinderräume zur Verfügung gestellt werden, um die Brücke relativ zum Grundteil zu bewegen.

Zudem kann vorgesehen sein, dass die Brücke derart schwimmend am Grundkörper gelagert ist, dass eine Bewegung der Brücke quer zur Schienenlängsrichtung möglich ist. Insgesamt kann nicht ausgeschlossen werden, dass die Brücke aufgrund der quer zur Schienenlängsrichtung wirkenden Bremskraft bedingt verformt und insbesondere aufgebogen wird. Um trotz des Verformens oder Aufbiegens der Brücke eine funktionssichere Vorrichtung bereitstellen zu können, ist insbesondere vorgesehen, dass die Brücke am Grundkörper schwimmend gelagert ist. Das aufgrund der schwimmenden Lagerung ausgleichbare Bewegungsspiel zwischen Grundkörper und Brücke ist insbesondere wenigstens geringfügig größer als eine denkbare Verformung oder Aufbiegung der Brücke aufgrund der wirkenden Bremskräfte. Insofern kann gewährleistet werden, dass auch dann, wenn mit maximaler Bremskraft abgebremst oder verriegelt wird, die Brücke nach wie vor in axialer Richtung relativ zum Grundkörper bewegt werden kann, ohne dass diese am Grundkörper verkantet oder verklemmt.

Vorteilhafterweise ist der Kolben mit einer Lippendichtung derart versehen, dass über die Lippendichtung das erforderliche Spiel bereitgestellt wird. Über Lippendichtungen kann ein im Vergleich zu O-Ringdichtungen wesentliche größeres Spiel ausgeglichen werden, welches im Bereich bis zu 1,5 mm oder 2 mm liegen kann.

Vorteilhafterweise begrenzt der brückenseitige Kolben und der kolbenstangenseitige Kolben jeweils aufeinander abgewandten oder einander zugewandten Seiten einen druckbeaufschlagbaren Druckraum, wobei die Druckräume miteinander druckverbunden sind. Hierdurch wird eine gleichzeitige Druckbeaufschlagung der beiden Druckräume gewährleistet. Zudem wirken die Drücke der beiden Druckräume in die gleiche Richtung. Die Druckverbindung der beiden Druckräume kann insbesondere durch eine hohl ausgebildete Kolbenstange erfolgen.

Vorteilhafterweise ist vorgesehen, dass wenigstens ein Kolben auf der dem Druckraum abgewandten Seite mittels Federmitteln derart vorgespannt ist, dass die Brücke in die Verriegelungsrichtung gedrängt wird. Bei einer Drucklosschaltung des Kolben-Zylinder-Antriebs wird folglich die Verriegelungslage aufgrund der Federbeaufschlagung eingenommen. Zum Lösen der Verriegelungslage ist es dann erforderlich, den jeweiligen Druckraum mit insbesondere Druckluft zu beaufschlagen.Ferner ist vorteilhaft, wenn wenigstens ein Keilelement vorgesehen ist, welches in Längsrichtung mit der Brücke bewegungsgekoppelt und um seine Mittellängsachse wenigstens bedingt verdrehbar angeordnet ist, wobei bei einer Axialbewegung der Brücke in die Verriegelungslage das Keilelement mittel- oder unmittelbar gegen die Bremszunge wirkt und dadurch die Bremszunge zur Abbremsung und/oder Feststellung des Schlittens gegen die Schiene wirkt. Vorteilhaft ist hierbei, dass die Bremszunge aufgrund ihrer Ausrichtung parallel zur Schienenlängsrichtung eine vergleichsweise große Kontaktfläche aufweist, welche gegen die Schiene wirkt. Zudem wird das Keilelement um seine Mittellängsachse wenigstens bedingt verdrehbar angeordnet. Hierdurch wird gewährleistet, dass das Keilelement optimal mittel- oder unmittelbar gegen die Bremszunge wirkt.

Insbesondere auch dann, wenn die Brücke aufgrund der quer zur Schienenlängsrichtung wirkenden Bremskraft bedingt verformt und insbesondere aufgebogen wird. Die Verformung beziehungsweise das Aufbiegen der Brücke wird durch die um seine Längsachse drehbare Anordnung des Keilelements ausgeglichen.

Besonders vorteilhaft ist, wenn die Brücke die Schiene wenigstens abschnittsweise umgreift und wenn auf einander gegenüberliegenden Seiten der Schiene am Grundkörper zwei Bremszungen vorgesehen sind. An der Brücke ist dann einander gegenüberliegend für jede Bremszunge jeweils ein Keilelement vorgesehen. Insbesondere vorteilhaft ist ein symmetrischer Aufbau. Beim Einleiten der quer zur Schienenlängsrichtung wirkenden Bremskraft wird diese dann von einander gegenüberliegenden Seiten in die Schiene eingeleitet.

Ein daraus resultierendes, bedingtes Aufbiegen der Brücke wird, wie bereits angesprochen, durch die um ihre jeweilige Mittellängsachse verdrehbaren Keilelemente und über das Spiel in Querrichtung ausgeglichen.

Bei einer weiteren vorteilhaften Ausgestaltung der Erfindung ist vorgesehen, dass das wenigstens eine Keilelement um die wenigstens eine Bremszunge jeweils eine schräg zur Schienenlängsrichtung verlaufende Keilfläche aufweist, wobei die beiden Keilflächen parallel zueinander verlaufend ausgebildet sein können. Dadurch, dass beide Bauteile schräg zur Schienenlängsrichtung verlaufende Keilflächen aufweisen, kann eine höhere Klemmwirkung bei einer vergleichsweise geringen Relativbewegung von Keilelement zu Bremszunge realisiert werden.

Vorteilhafterweise sind zwischen dem wenigstens einen Keilelement und der zugehörigen Bremszunge Wälzkörper, insbesondere Wälzkugeln oder Wälzrollen, vorgesehen.

Ferner ist vorteilhaft, wenn die wenigstens eine Bremszunge einen fest am Grundkörper angeordneten Befestigungsabschnitt, einen sich daran anschließenden Gelenkabschnitt und einen mit dem Keilelement zusammenwirkenden Bremsabschnitt aufweist. Die Bremszunge kann sich dabei in Schienenlängsrichtung über die gesamte Schlittenlänge erstrecken. Die Bremszunge ist vorzugsweise einstückig ausgebildet, wobei der Gelenkabschnitt als Festkörpergelenk ausgebildet ist. Die Bremszunge ist insgesamt derart am Grundkörper befestigt, dass zwischen der Schiene und der Bremszunge ein vergleichsweise kleiner Spalt ist. In der Verriegelungslage wird aufgrund der Verformung der Bremszunge der Spalt auf Null reduziert; der Bremsabschnitt der wenigstens einen Bremszunge wirkt dann zur Abbremsung und/oder Feststellung des Schlittens gegen die Schiene.

Das wenigstens eine Keilelement kann insbesondere als Keilzylinder ausgebildet sein, der in seinem mittleren Bereich eine Keilfläche aufweist. Der Keilzylinder erstreckt sich parallel zur Schienenlängsrichtung und ist insbesondere an seinen beiden freien Enden drehbar an der Brücke gelagert.

Zur axialen Bewegung der Brücke gegenüber dem Grundkörper kann vorzugsweise zwischen dem Grundkörper und der Brücke wenigstens eine Kolben-Zylinder-Einheit vorgesehen sein. Bei Verwendung von zwei Keilelementen sind vorzugsweise zwei parallel zueinander angeordnete Kolben-Zylinder-Einheiten vorgesehen, die parallel angesteuert werden. Eine Kolben-Zylinder-Einheit betätigt dann das eine Keilelement; die andere Kolben-Zylinder-Einheit betätigt dann das andere Keilelement. Beim gleichzeitigen Betätigen der beiden Kolben-Zylinder-Einheiten verlagern sich folglich parallel die beiden Keilelemente, über welche dann die Bremskraft in die Bremszunge eingeleitet wird. Aufgrund der Bremskraft kann eine Verformung der Brücke einhergehen. Diese Verformung wird, wie eingangs erwähnt, Diese Verformung wird, wie eingangs erwähnt, über die drehbare Anordnung der Keilelemente und über das Spiel in Querrichtung ausgeglichen.

Ferner ist vorteilhaft, wenn an der Brücke Anbringungsabschnitte zur Anbringung eines mit dem Schlitten verfahrbaren Teils vorgesehen sind. Solche Teile können beispielsweise Backen, Finger, Werkzeuge, Werkstücke oder dergleichen sein. Insbesondere dann, wenn die Schiene vertikal im Raum angeordnet wird, wird hierdurch erreicht, dass die Gewichtskraft des an der Brücke angebrachten Bauteils die Bremskraft unterstützt.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.

Es zeigen:
- Figur 1: eine perspektivische Ansicht einer erfindungsgemäßen Vorrichtung in der Verriegelungslage;
- Figur 2: eine perspektivische Ansicht einer erfindungsgemäßen Vorrichtung in der Freigabelage;
- Figur 3: eine Vorderansicht der Vorrichtung gemäß Figur 1;
- Figur 4: einen Längsschnitt der Vorrichtung gemäß Figur 3 entlang der Linie IV in Figur 3 in der Verriegelungslage;
- Figur 5: einen Schnitt der Figur 4 entsprechend, in der Entriegelungslage;
- Figur 6: einen Querschnitt der Vorrichtung gemäß Figur 5 entlang der Linie VI in Figur 5; und
- Figur 7: einen vergrößerten Ausschnitt aus Figur 5.

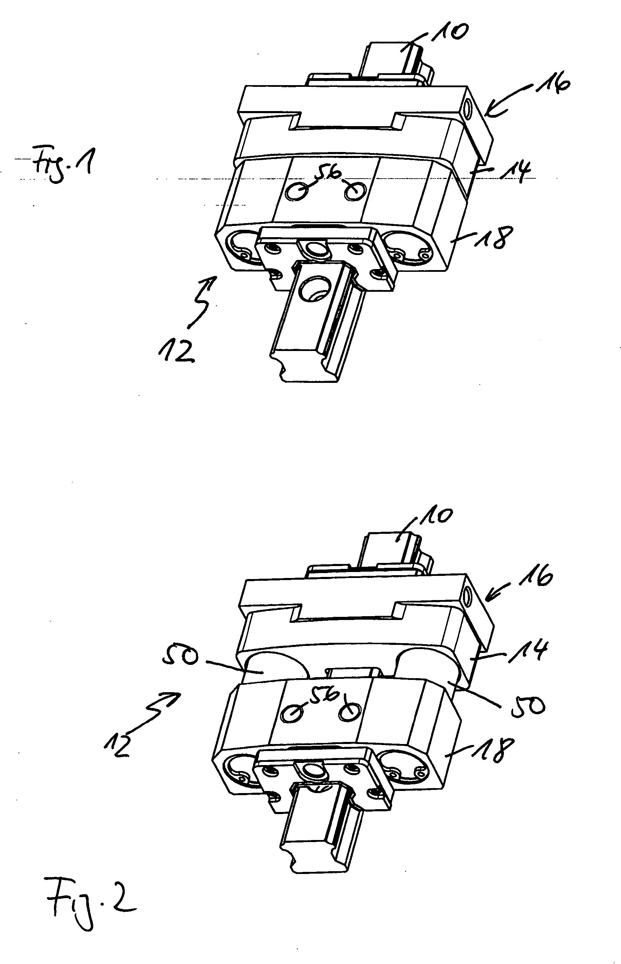

In der Figur 1 und 2 ist ein auf einer Schiene 10 verfahrbar angeordneter Schlitten 12 dargestellt, der einen Grundkörper 14 und eine Brems- und Feststellvorrichtung 16 umfasst. Die Brems- und Feststellvorrichtung 16 umfasst dabei eine relativ zum Grundkörper 14 in axialer Richtung verlagerbare Brücke 18. In der in der Figur 1 dargestellten Verriegelungslage ist die Brücke 18 näher am Grundkörper 14 angeordnet als in der in der Figur 2 gezeigten Freigabelage.

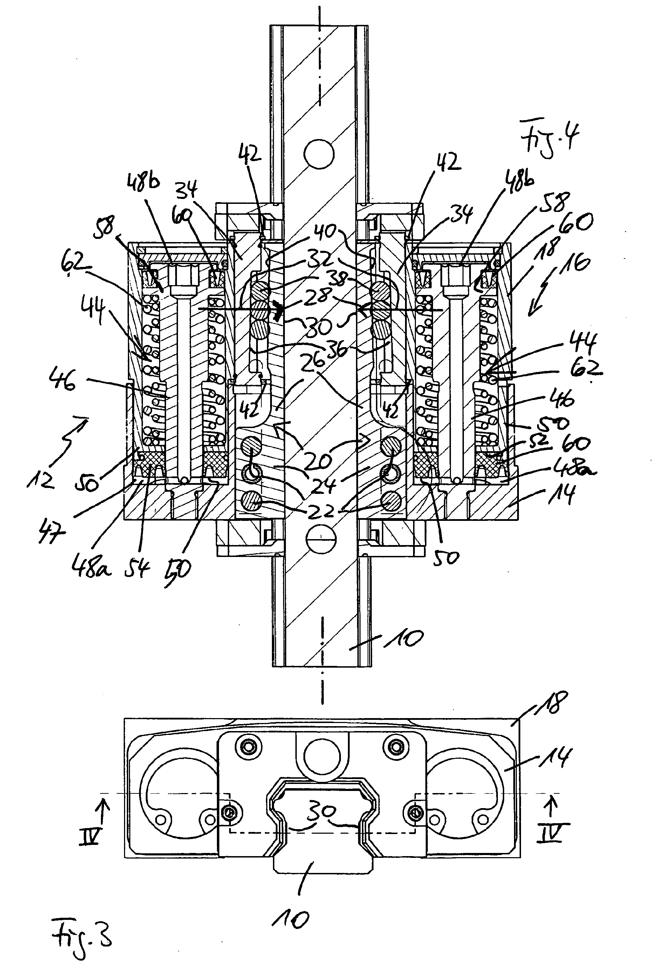

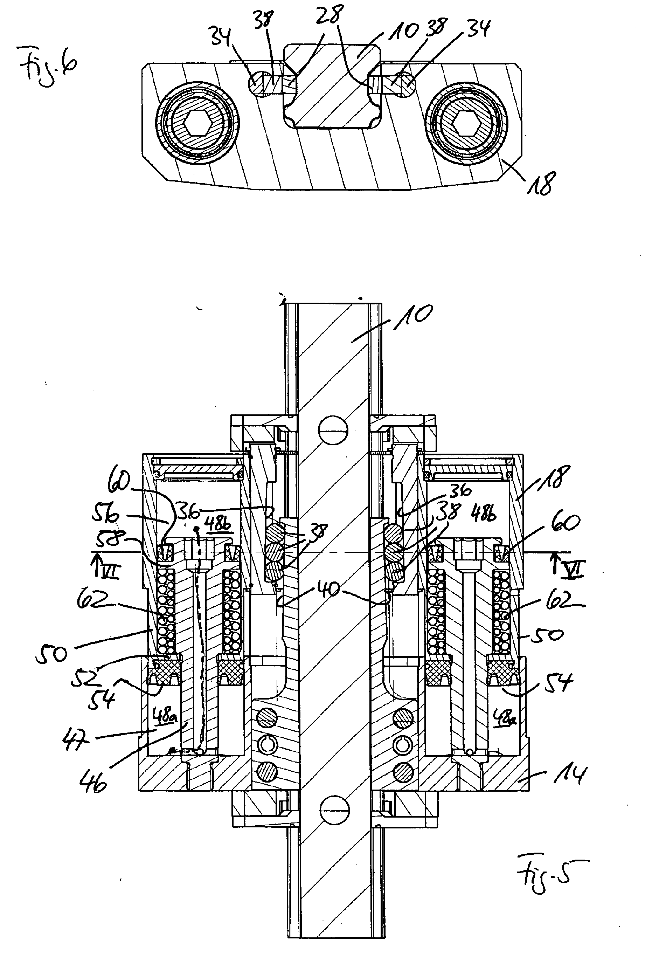

Wie aus den Schnitten gemäß Figur 4 und 5 deutlich wird, sind am Grundkörper 14 zwei einander gegenüberliegend und parallel zueinander angeordnete Bremszungen 20 mittels Befestigungsschrauben 22 befestigt. Die Bremszungen 20 weisen dabei jeweils drei Funktionsabschnitte auf. Im Bereich der Schrauben 22 ist ein Befestigungsabschnitt 24 zur Befestigung am Grundkörper 14 vorgesehen. Daran schließen sich jeweils ein Gelenkabschnitt 26 und ein Bremsabschnitt 28 an. Die Bremszungen 20 sind dabei jeweils einstückig ausgebildet. Der Gelenkabschnitt 26 ist jeweils als Festkörpergelenk realisiert.

In der in der Figur 5 gezeigten Freigabelage ist zwischen den taillierten, parallel zueinander verlaufenden Längsseiten 30 der Schiene 10 - die in Figur 2 deutlich zu erkennen sind -, und den mit den Längsseiten 30 zusammenwirkenden Bremszungen 20 ein Passungsspalt vorgesehen. Insofern kann in der Freigabelage der Schlitten 12 samt Vorrichtung 16 an der Schiene 10 entlang gleiten.

Zum Abbremsen und Feststellen des Schlittens 12 an der Schiene 10 wirkt eine Bremskraft 32 in Querrichtung zur Schiene 10 derart auf die Bremsabschnitte 28, dass diese den Schlitten 12 in seiner Bewegung abbremsen beziehungsweise an der Schiene 10 verriegeln.

Wie ebenfalls aus den Schnitten gemäß Figur 4 und 5 deutlich wird, sind zwei Keilelemente 34 vorgesehen, die in Längsrichtung mit der Brücke 18 bewegungsgekoppelt an der Brücke 18 befestigt sind. Die Keilelemente 34 sind derart an der Brücke 18 angeordnet, dass sie wenigstens bedingt um ihre Mittellängsachse 35 verdrehbar sind. Die Keilelemente 34 sind insgesamt als Keilzylinder ausgebildet, welche mittels Klemmscheiben 42 um ihre Mittellängsachse verdrehbar an der Brücke angeordnet sind. Die Keilelemente 34 weisen auf den einander zugewandten Seiten in einem mittleren Bereich schräg zur Mittellängsachse verlaufende Keilflächen 36 auf. Zwischen den Keilflächen 36 der Keilelemente 34 und den den Keilflächen 36 zugewandten Seiten der Bremsabschnitte 28 der Keilelemente sind Wälzkörper 38 in Form von Wälzrollen vorgesehen, die insbesondere auch in dem Schnitt gemäß Figur 6 deutlich zu erkennen sind.

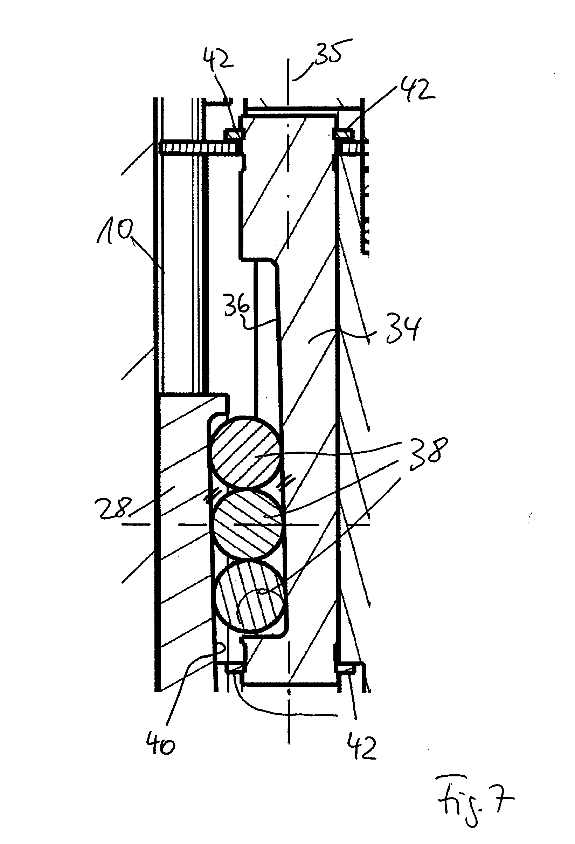

Wie aus dem vergrößerten Ausschnitt gemäß Figur 7 deutlich wird, sind bei der gezeigten Ausführungsform nicht nur die Keilflächen 36 der Keilelemente 34 leicht schräg zur Schienenlängsrichtung verlaufend angeordnet, sondern auch die den Keilflächen 36 gegenüberliegenden Keilflächen 40 der Bremsabschnitte 28. Die Keilflächen 36 und die Keilflächen 40 verlaufen dabei parallel zueinander.

Aufgrund der Keilflächen 36 und 40 wird die Axialbewegung der Brücke 18 in die quer zur Schienenlängsrichtung verlaufende Bremskraft 32 umgewandelt. Aufgrund der daraus resultierenden Bremskraft 32 kann es zu einem bedingten Aufbiegen der Brücke 18 kommen.

Zur axialen Verlagerung der Brücke 18 sind zwischen der Brücke 18 und dem Grundkörper 14 zwei Kolben-Zylinder-Antriebe 44 vorgesehen.

Die beiden Antriebe 44 weisen jeweils eine Kolbenstange 46 auf, die am Grundkörper 14 eingeschraubt befestigt ist. Wie insbesondere aus Figur 5 deutlich wird, durchgreifen die Kolbenstangen 46 jeweils einen grundteilseitigen Zylinderraum 47. Im Zylinderraum 47 ist jeweils ein brückenseitiger Kolben 50 vorgesehen, mit einer ringförmigen Kolbenfläche 52, an der eine Ringlippendichtung 54 angebracht ist. Der jeweils hohl ausgebildete Kolben 15 weist einen brückenseitigen Zylinderraum 56 auf, in welchen die Kolbenstange 46 ragt. Die Kolbenstange 46 weist im Bereich ihres freien Endes einen grundteilseitigen Kolben 58 auf, an den eine ringförmige Lippendichtung 60 angeordnet ist.

Der brückenseitige Kolben 52, beziehungsweise die zugehörige Lippendichtung 54 begrenzen zusammen mit dem Zylinder 47 einen Druckraum 48a. Der kolbenstangenseitige Kolben 58 mit zugehöriger Dichtung 60 begrenzen einen Druckraum 48b. Die beiden Druckräume 48a und 48b sind durch die hohl ausgebildete Kolbenstange miteinander druckverbunden.

Zum Verlagern der Brücke 18 relativ zum Grundkörper 14 in die Freigabelage werden die beiden Druckräume 48a und 48b mit Druckluft beaufschlagt. Aufgrund der daraus resultierenden Axialbewegung der Brücke 18 gegenüber dem Grundkörper 14, und damit der Keilelemente 34 gegenüber den Bremsabschnitten 28 der Bremszungen 20, wird die Bremskraft 32 abgebaut. Die Wälzkörper 38 befinden sich dann mit geringem Spiel zwischen den Keilflächen 36 und 40.

Zwischen der dem Druckraum 48a abgewandten Seite der Kolbenfläche 52 und der dem Druckraum 48b abgewandten Seite des Kolbens 58 sind Schraubenfedern 62 vorgesehen. Die Schraubenfedern sind derart angeordnet, dass bei Drucklosschaltung der beiden Druckräume 48a und 48b die Brücke in die Verriegelungslage gedrängt wird, wie sie in Figur 4 dargestellt ist.

Damit wenigstens eine geringfügige Bewegung der Brücke 18 quer zur Schienenlängsrichtung möglich ist, sind die Kolben 52 und 58 in den jeweils zugehörigen Zylindern 47 und 56 mit Spiel gelagert. Folglich ist zwischen dem Außenumfang des Kolbens 50 und der Innenwand des Zylinderraums 47 entsprechend Spiel vorgesehen. Ebenso ist zwischen dem Außenumfang des Kolbens 58 und der Innenwand des Zylinderraums 56 entsprechend Spiel vorgesehen. Dieses Spiel wird durch die jeweilige Lippendichtung 54 und 60 ausgeglichen.

Das vorzusehende Spiel zwischen den Kolben 50 beziehungsweise 58 und den Zylinderräumen 47 beziehungsweise 56 ist derart gewählt, dass bei Einleiten einer Bremskraft ein Aufbiegen der Brücke möglich ist, ohne dass die Kolben 50 und 58 in den Zylinderräumen 47 und 56 verkanten oder verklemmen.

Das quer zur Bewegungsrichtung vorhandene Spiel ist dafür gedacht, wenn Mittelebene Klemmelement und Mittelebene Schiene 10 einen Versatz zueinander haben. Dieser wird durch das Spiel ausgeglichen, wodurch sichergestellt wird, dass beide Bremszungen 20 gleichmäßig verformt werden und die gleichen Kräfte aufbringen.

Insbesondere dann, wenn die Schiene 10 in einer vertikalen Position verbaut wird, ist es vorteilhaft, an der Brücke 18 Anbringungsabschnitte 56, wie sie in Figur 1 gezeigt sind, vorzusehen. In den Anbringungsabschnitten 56 können Bauteile, insbesondere zu bewegende Backen, Finger, Werkstücke oder Werkzeuge angebracht werden. Die Gewichtskraft dieser Bauteile erhöht dann die von den Federelementen 54 bereitgestellte Federkraft.

In dem in den Figuren gezeigten Ausführungsbeispiel sind zwei Bremsbacken, zwei Keilelemente und auch zwei Kolben-Zylinder-Antriebe gezeigt. Die Erfindung umfasst allerdings auch Ausführungsformen mit lediglich einer Bremsbacke, einem Keilelement und einem Kolben-Zylinder-Antrieb.

## Patentansprüche

1. Schlitten (12) mit einer Brems- und/oder Feststellvorrichtung (16) zum Abbremsen und/oder Feststellen des entlang einer Schiene (10) geführten, einen Grundkörper (14) aufweisenden Schlittens (12), wobei am Grundkörper (14) eine relativ zum Grundkörper (14) in parallel zur Schienenlängsrichtung verlaufender Richtung verlagerbare Brücke (18) und eine parallel zur Schienenlängsrichtung verlaufende Bremszunge (20) derart vorgesehen sind, dass bei einer Bewegung der Brücke (18) in eine Verrieglungslage die Bremszunge (20) zur Abbremsung und/oder Feststellung des Schlittens (12) gegen die Schiene (10) gedrängt wird und wobei zur axialen Bewegung der Brücke (18) zwischen dem Grundkörper (14) und Brücke (18) wenigstens ein Kolben-ZylinderAntrieb (44) vorgesehen ist, wobei der Kolben (50 bzw. 58) derart im Zylinder (47 bzw. 56) mit Spiel gelagert ist, dass die Bewegung der Brücke (18) quer zur Schienenlängsrichtung möglich ist und wobei der Zylinder (47 bzw. 56) vom Grundkörper (14) und/oder von der Brücke (18) gebildet wird und dass an der Brücke (18) und/oder am Grundkörper (14) ein in den Zylinder (47 bzw. 56) eingreifender Kolben (50 bzw. 58) angeordnet ist, wobei ein grundkörperseitiger Zylinderraum (47) vorgesehen ist, **dadurch gekennzeichnet, dass** ein brückenseitiger, in den Zylinderraum (47) eingreifender Kolben (50) vorgesehen ist, wobei der brückenseitige Kolben (50) hohl ausgebildet ist und einen brückenseitigen Zylinderraum (56) bildet, und dass am Grundteil (14) eine den grundteilseitigen Zylinderraum (47) durchgreifende und in einen brückenseitigen Zylinderraum (56) ragende Kolbenstange (46) vorgesehen ist, welche einen im brückenseitigen Zylinderraum (56) liegenden Kolben (58) umfasst.

2. Schlitten (12) nach Anspruch 1, **dadurch gekennzeichnet, dass** die Brücke (18) derart schwimmend am Grundkörper (14) gelagert ist, dass eine Bewegung der Brücke (18) quer zur Schienenlängsrichtung möglich ist.

3. Schlitten (12)nach Anspruch 1 oder 2, **dadurch gekennzeichnet, dass** der Kolben (50 bzw. 58) mit einer Lippendichtung (60, 54) derart versehen ist, dass die Bewegung der Brücke (18) quer zur Schienenlängsrichtung möglich ist.

4. Schlitten (12)nach einem der vorhergehenden Ansprüche, **dadurch gekennzeichnet, dass** der brückenseitige Kolben (50) und der kolbenstangenseitige Kolben (58) jeweils auf einander abgewandten oder einander zugewandten Seiten einen druckbeaufschlagbaren Druckraum (48a, 48b) begrenzen, wobei die beiden Druckräume (48a, 48b) miteinander druckverbunden sind.

5. Schlitten (12)nach einem der vorhergehenden Ansprüche, **dadurch gekennzeichnet, dass** wenigstens ein Kolben (50 bzw. 58) auf der dem Druckraum (48a, 48b) abgewandten Seite mittels Federmitteln (62) derart vorgespannt angeordnet ist, dass die Brücke (18) in die Verrieglungslage gedrängt wird.

6. Schlitten (12)nach einem der vorhergehenden Ansprüche, **dadurch gekennzeichnet, dass** zwei oder mehr identisch ausgebildete Kolben-Zylinder-Antriebe (44) vorgesehen sind.

7. Schlitten (12)nach einem der vorhergehenden Ansprüche, **dadurch gekennzeichnet, dass** wenigstens ein Keilelement (34) vorgesehen ist, welches in axialer Richtung mit der Brücke (18) bewegungsgekoppelt und um seine Mittellängsachse wenigstens bedingt verdrehbar angeordnet ist, wobei bei einer Bewegung der Brücke (18) in axialer Richtung in die Verrieglungslage das Keilelement (34) mittel- oder unmittelbar gegen die Bremszunge (20) wirkt.

8. Schlitten (12)nach einem der vorherigen Ansprüche, **dadurch gekennzeichnet, dass** die Brücke (18) die Schiene (10) wenigstens abschnittsweise umgreift, dass auf einander gegenüberliegenden Seiten der Schiene (10) am Grundkörper (14) zwei Bremszungen (20) vorgesehen sind, und dass an der Brücke (18) einander gegenüberliegend für jede Bremszunge (20) jeweils ein Keilelement (34) vorgesehen ist.

9. Schlitten (12)nach einem der vorherigen Ansprüche, **dadurch gekennzeichnet, dass** das wenigstens eine Keilelement (34) und die wenigstens eine Bremszunge (20) jeweils eine schräg zur Schienenlängsrichtung verlaufende Keilfläche (36 bzw. 40) aufweist, wobei die beiden Keilflächen (36 bzw. 40) parallel zueinander verlaufend ausgebildet sein können.

10. Schlitten (12)nach einem der vorhergehenden Ansprüche, **dadurch gekennzeichnet, dass** die wenigstens eine Bremszunge (20) einen fest am Grundkörper (14) angeordneten Befestigungsabschnitt (24), einen sich daran anschließenden Gelenkabschnitt (26) und einen mit dem Keilelement (34) zusammenwirkenden Bremsabschnitt (28) aufweist, wobei vorzugsweise die wenigstens eine Bremszunge (20) einstückig ausgebildet ist und der Gelenkabschnitt (26) als Festkörpergelenk ausgebildet ist.

11. Schlitten (12) nach einem der vorhergehenden Ansprüche, **dadurch gekennzeichnet, dass** das wenigstens eine Keilelement (34) als Keilzylinder ausgebildet ist, der in seinem mittleren Bereich eine Keilfläche (36) aufweist.

12. Schlitten (12)nach einem der vorhergehenden Ansprüche, **dadurch gekennzeichnet, dass** an der Brücke (18) Anbringungsabschnitte (56) zur Anbringung eines mit dem Schlitten (12) verfahrbaren Teils vorgesehen sind.

## Claims

1. A slide (12) having a brake and/or fixing device (16) for braking and/or fixing the slide (12), the slide being guided along a rail (10) and having a base body (14), in which a bridge (18) that can be shifted relative to the base body (14) in the direction parallel to the longitudinal direction of the rail and a brake tongue (20) extending parallel to the longitudinal direction of the rail are provided on the base body (14) in such a manner that upon a motion of the bridge (18) into a locking position, the brake tongue (20), for braking and/or fixing the slide (12), is forced against the rail (10), and for axially moving the bridge (18), at least one piston-cylinder drive (44) is provided between the base body (14) and the bridge (18), and the piston (50 and 58) is supported with play in the cylinder (47 and 56, respectively) in such a manner that the motion of the bridge (18) transversely to the longitudinal direction of the rail is possible, and the cylinder (47 and 56) is formed by the base body (14) and/or by the bridge (18), and that a piston (50 and 58) engaging the cylinder (47 and 56, respectively) is disposed on the bridge (18) and/or on the base body (14), and a cylinder chamber (47) is provided on the side toward the base body, **characterized in that** a piston (50) on the side toward the bridge and engaging the cylinder chamber (47) is provided, and the piston (50) on the side toward the bridge is embodied as hollow and forms a cylinder chamber (56) on the side toward the bridge; and that a piston rod (46) on the side toward the base body is provided protruding into a cylinder chamber (56) on the side toward the bridge, which includes a piston (58) located in the cylinder chamber (56) on the side toward the bridge.

2. The slide (12) according to claim 1, **characterized in that** the bridge (18) is supported in floating fashion on the base body (14) in such a manner that a motion of the bridge (18) transversely to the longitudinal direction of the rail is possible.

3. The slide (12) according to claim 1 or 2, **characterized in that** the piston (50 or 58) is provided with a lip seal (60, 54) in such a manner that the motion of the bridge (18) transversely to the longitudinal direction of the rail is possible.

4. The slide (12) according to one of the foregoing claims, **characterized in that** the piston (50) on the side toward the bridge and the piston (58) on the side toward the piston rod, on sides facing away from and toward one another, each define a respective pressure chamber (48a, 48b) which can be subjected to pressure, and the two pressure chambers (48a, 48) communicate with one another in terms of pressure.

5. The slide (12) according to one of the foregoing claims, **characterized in that** at least one piston (50 or 58) is disposed on the side facing away from the pressure chamber (48a, 48b), the piston being prestressed by spring means (62), in such a manner that the bridge (18) is forced into the locking position.

6. The slide (12) according to one of the foregoing claims, **characterized in that** two or more identically embodied piston-cylinder drives (44) are provided.

7. The slide (12) according to one of the foregoing claims, **characterized in that** at least one wedge element (34) is provided, which is disposed such that it is coupled for motion in the axial direction to the bridge (18) and is at least conditionally rotatable about its central longitudinal axis, and upon a motion of the bridge (18) in the axial direction into the locking position, the wedge element (34) acts directly or indirectly counter to the brake tongue (20).

8. The slide (12) according to one of the foregoing claims, **characterized in that** the bridge (18) grips the rail (10) in at least some portions; that on opposite sides of the rail (10), two brake tongues (20) are provided on the base body (14); and that on the bridge (18), for each brake tongue (20) one wedge element (34) each, opposite one another, is provided.

9. The slide (12) according to one of the foregoing claims, **characterized in that** the at least one wedge element (34) and the at least one brake tongue (20) each have a wedge face (36 and 40, respectively) extending obliquely to the longitudinal direction of the rail, and the two wedge faces (36 and 40) can be embodied extending parallel to one another.

10. The slide (12) according to one of the foregoing claims, **characterized in that** the at least one brake tongue (20) has a fastening portion (24) disposed fixedly on the base body (14), a joint portion (26) adjoining the fastening portion, and a brake portion (28) cooperating with the wedge element (34), and the at least one brake tongue (20) is preferably embodied in one piece and the joint portion (26) is embodied as a solid-state joint.

11. The slide (12) according to one of the foregoing claims, **characterized in that** the at least one wedge element (34) is embodied as a wedge cylinder, which has a wedge face (36) in its middle region.

12. The slide (12) according to one of the foregoing claims, **characterized in that** mounting portions (56) for mounting a part that is movable with the slide (12) are provided on the bridge (18).

## Revendications

1. Chariot (12) comprenant un dispositif de freinage et/ou de blocage (16) destiné à freiner et/ou à bloquer le chariot (12) présentant un corps de base (14) guidé le long d'un rail (10), un pont (18) mobile par rapport au corps de base (14) parallèlement à la direction longitudinale du rail et une languette de freinage (20) s'étendant parallèlement à la direction longitudinale du rail étant prévus, de façon à ce que lorsque l'on déplace le pont (18) dans une position de verrouillage, la languette de freinage (20) vienne s'appuyer contre le rail (10) en vue de freiner et/ou bloquer le chariot (12), au moins un entraînement à piston et cylindre (44) étant prévu entre le corps de base (14) et le pont (18) pour le mouvement axial du pont (18), le piston (50, 58) étant monté dans le cylindre (47, 56) avec du jeu, de sorte que le mouvement du pont (18) est possible transversalement à la direction longitudinale du rail, le cylindre (47, 56) étant formé par le corps de base (14) et/ou par le pont (18,) un piston (50, 58) venant s'engager dans le cylindre (47, 56) étant agencé au niveau du pont (18) et/ou sur le corps de base (14), une chambre de cylindre (47) étant prévue côté corps de base, **caractérisé en ce qu'**il est prévu un piston (50) côté pont venant s'engager dans la chambre de cylindre (47), le piston (50) côté pont étant réalisé creux et formant une chambre de cylindre (56) côté pont, et **en ce qu'**il est prévu sur le corps de base (14) une tige de piston (46) traversant la chambre de cylindre (47) côté corps de base et faisant saillie dans une chambre de cylindre (56) côté pont, laquelle tige comprend un piston (58) situé dans la chambre de cylindre (56) côté pont.

2. Chariot (12) selon la revendication 1, **caractérisé en ce que** le pont (18) est monté flottant sur le corps de base (14) de façon à ce qu'un mouvement du pont (18) soit possible transversalement à la direction longitudinale du rail.

3. Chariot (12) selon la revendication 1 ou 2, **caractérisé en ce que** le piston (50, 58) est muni d'un joint à lèvres (60, 54) de façon à ce que le pont (18) puisse se déplacer transversalement à la direction longitudinale du rail.

4. Chariot (12) selon l'une des revendications précédentes, **caractérisé en ce que** le piston (50) côté pont et le piston (58) côté tige de piston délimitent chacun, au niveau de leurs côtés opposés ou de leurs côtés orientés l'un vers l'autre, une chambre de pression (48a, 48b) pouvant être mise sous pression, les deux chambres de pression (48a, 48b) étant reliées entre elles en pression.

5. Chariot (12) selon l'une des revendications précédentes, **caractérisé en ce qu'**au moins un piston (50, 58) est agencé en précontrainte à l'aide de moyens à ressort (62) sur le côté opposé à la chambre de pression (48a, 48b) de sorte que le pont (18) soit poussé en position de verrouillage.

6. Chariot (12) selon l'une des revendications précédentes, **caractérisé en ce qu'**il est prévu deux entraînements à piston et cylindre (44) identiques, ou plus.

7. Chariot (12) selon l'une des revendications précédentes, **caractérisé en ce qu'**il est prévu au moins un élément en forme de clavette (34), lequel est couplé en mouvement dans la direction axiale avec le pont (18) et est agencé mobile en rotation au moins dans certaines conditions autour de son axe longitudinal médian, un mouvement du pont (18) dans la direction axiale en position de verrouillage faisant agir l'élément en forme de clavette (34) directement ou indirectement contre la languette de freinage (20).

8. Chariot (12) selon l'une des revendications précédentes, **caractérisé en ce que** le pont (18) saisit au moins par endroits le rail (10), **en ce qu'**il est prévu sur les côtés opposés du rail (10) sur le corps de base (14) deux languettes de freinage (20) et **en ce qu'**il est prévu sur le pont (18) pour chaque languette de freinage (20) un élément en forme de clavette (34).

9. Chariot (12) selon l'une des revendications précédentes, **caractérisé en ce que** ledit au moins un élément en forme de clavette (34) et ladite au moins une languette de freinage (20) présentent chacun une surface cunéiforme (36, 40) s'étendant perpendiculairement à la direction longitudinale du rail, les deux surfaces cunéiformes (36, 40) pouvant être réalisées parallèles entre elles.

10. Chariot (12) selon l'une des revendications précédentes, **caractérisé en ce que** ladite au moins une languette de freinage (20) présente une section de fixation (24) agencée fixement sur le corps de base (14), avec ensuite une section articulée (26) et une section de freinage (28) agissant avec l'élément de clavette (34), ladite au moins une languette de freinage (20) étant de préférence réalisée d'un seul tenant et la section articulée (26) étant réalisée sous la forme d'une articulation fixe.

11. Chariot (12) selon l'une des revendications précédentes, **caractérisé en ce que** ledit au moins un élément en forme de clavette (34) est réalisé sous la forme d'un cylindre tronconique, lequel présente dans sa zone médiane une surface cunéiforme (36).

12. Chariot (12) selon l'une des revendications précédentes, **caractérisé en ce qu'**il est prévu sur le pont (18) des sections de fixation (56) destinées à fixer une partie mobile avec le chariot (12).
